# EUROPEAN PATENT APPLICATION

(11) **EP 3 795 240 A1**
(43) Date of publication of application: **24.03.2021**
(21) Application number: 19804364.8
(22) Date of filing: 23.04.2019
(51) Int. Cl.: B01D 63/00, B01D 63/10

(54) **CHANNEL SPACER AND SPIRAL MEMBRANE ELEMENT**

(30) Priority: 18.05.2018 JP 2018096533
(71) Applicant: NITTO DENKO CORPORATION, Ibaraki-shi Osaka 567-8680 (JP)
(72) Inventor: OKAZAKI Yuha, Ibaraki-shi, Osaka 567-8680 (JP); UDA Yasuhiro, Ibaraki-shi, Osaka 567-8680 (JP)
(74) Representative: Cabinet Beau de Loménie
(86) International application number: PCT/JP2019/017248
(87) International publication number: WO 2019/220886

(57) **Abstract**

A spacer (13) of the present disclosure includes a plurality of first linear portions (21) and a plurality of second linear portions (22). The plurality of first linear portions (21) and the plurality of second linear portions (22) intersect each other to form a first opening portion (31) and a second opening portion (32) each having a diagonal line (31a or 32a) parallel to a predetermined direction, an opening area of the second opening portion (32) is smaller than an opening area of the first opening portion (31), and the difference between the length of the diagonal line (31a) of the first opening portion (31) and the length of the diagonal line (32a) of the second opening portion (32) is in the range of 10 to 35% of the length of the diagonal line (31a) of the first opening portion (31).

## Description

### TECHNICAL FIELD

The present invention relates to a flow path spacer and a spiral membrane element.

### BACKGROUND ART

Spiral membrane elements, for example, are used for water treatment such as desalination of seawater and production of pure water. A spiral membrane element includes a water collection tube and a plurality of separation membranes wound around the water collection tube. To ensure a flow path of raw water to be treated, a raw water flow path spacer having a mesh structure is placed between the separation membranes adjacent to each other.

Patent Literature 1 describes a raw water flow path spacer including parallel strings placed along the flow direction of raw water and cross strings placed along a direction intersecting with the flow direction of raw water. According to Patent Literature 1, the cross strings thinner than the parallel strings allow a reduction in pressure loss in a raw water flow path.

### CITATION LIST

### Patent Literature

Patent Literature 1: JP 2005-305422 A

### SUMMARY OF INVENTION

### Technical Problem

Flow path spacers are required not only to be capable of achieving a low pressure loss but also to have an ability to reduce formation of a concentration polarization layer. A concentration polarization layer is a layer having a high concentration of a solute, such as ions and salts, that cannot permeate a separation membrane and is formed by accumulation of such a solute in the vicinity of the surface of a separation membrane. A concentration polarization layer increases an osmotic pressure in the vicinity of the surface of a separation membrane and decreases the amount of permeated water.

How likely a concentration polarization layer is to be formed can be expressed by the magnitude of shear stress acting on a separation membrane. The higher shear stress acting on a separation membrane is, the more likely a solute is to be washed away from the vicinity of the surface of the separation membrane. That is, the less likely a concentration polarization layer is to be formed.

However, shear stress and pressure loss are essentially in a trade-off relationship, and it is difficult to achieve both of them at the same time. The present disclosure provides a flow path spacer having a good balance between shear stress and pressure loss and a spiral membrane element including the flow path spacer.

### Solution to Problem

The present disclosure provides a flow path spacer to be used between separation membranes wounded around a liquid collection tube of a spiral membrane element, the flow path spacer including:
a plurality of first linear portions each extending in a first direction inclined with respect to a longitudinal direction of the liquid collection tube; and
a plurality of second linear portions each extending in a second direction inclined with respect to both the longitudinal direction of the liquid collection tube and the first direction, wherein
the plurality of first linear portions and the plurality of second linear portions intersect each other to form a first opening portion and a second opening portion each having a diagonal line parallel to a predetermined direction,
an opening area of the second opening portion is smaller than an opening area of the first opening portion, and
the difference between the length of the diagonal line of the first opening portion and the length of the diagonal line of the second opening portion is in the range of 10 to 35% of the length of the diagonal line of the first opening portion.

### Advantageous Effects of Invention

A flow path spacer having a good balance between shear stress and pressure loss can be provided according to the present disclosure.

### BRIEF DESCRIPTION OF DRAWINGS

FIG. 1 is a perspective view showing a spiral membrane element according to one embodiment of the present disclosure.
FIG. 2 is a partial plan view of a first flow path spacer included in the spiral membrane element shown in FIG. 1.
FIG. 3 is a partial cross-sectional view of a first flow path spacer placed between separation membranes.
FIG. 4 is a partial plan view of a first flow path spacer according to a modification 1.
FIG. 5 is a partial plan view of a first flow path spacer according to a modification 2.
FIG. 6 is a partial plan view of a first flow path spacer according to a modification 3.
FIG. 7 shows a model of a flow path spacer used for simulation.

### DESCRIPTION OF EMBODIMENTS

Embodiments of the present invention will be described with reference to the drawings hereinafter. The present invention is not limited to the following embodiments.

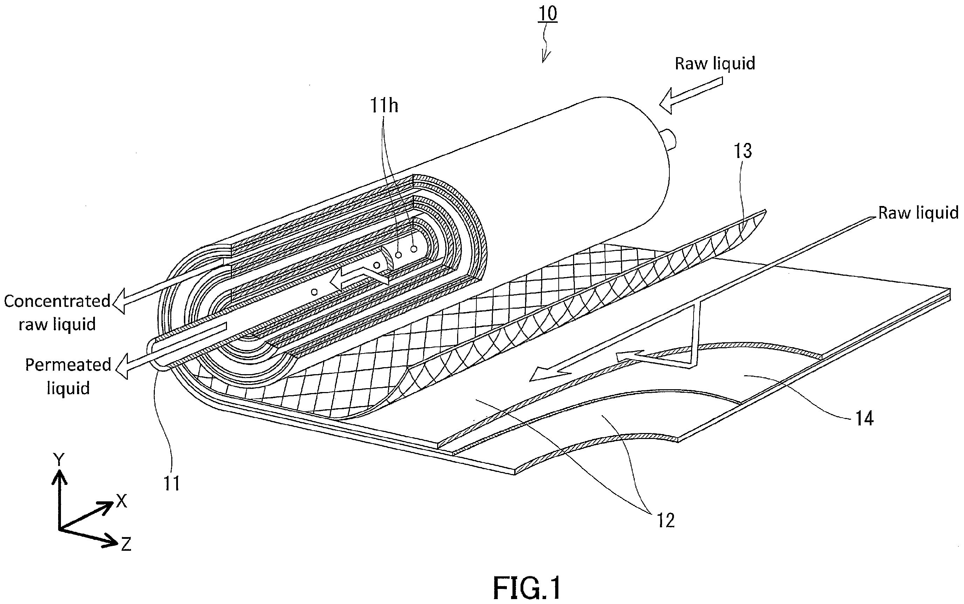

FIG. 1 shows a partially developed view of a spiral membrane element according to one embodiment of the present disclosure. A spiral membrane element 10 (which may be referred to simply as "membrane element 10" hereinafter) includes a liquid collection tube 11, a plurality of separation membranes 12, a first flow path spacer 13, and a second flow path spacer 14.

Herein, an X direction is a direction parallel to the longitudinal direction (axis direction) of the liquid collection tube 11. A Y direction and a Z direction are each a radius direction of the liquid collection tube 11 and are mutually orthogonal.

The plurality of separation membranes 12 are layered, sealed on three sides to form a sack-like structure, and wound around the liquid collection tube 11. The first flow path spacer 13 is placed between the separation membranes 12 so as to be located outside the sack-like structure. The first flow path spacer 13 ensures a space as a raw liquid flow path between the separation membranes 12. The second flow path spacer 14 is placed between the separation membranes 12 so as to be located inside the sack-like structure. The second flow path spacer 14 ensures a space as a permeated liquid flow path between the separation membranes 12. The opening end of the sack-like structure is connected to the liquid collection tube 11 so that the permeated liquid flow path communicates to the liquid collection tube 11. The type of the raw liquid is not particularly limited. The raw liquid may be seawater, wastewater, or water used to produce pure water.

The liquid collection tube 11 serves to collect a permeated liquid having permeated each separation membrane 12 to direct the permeated liquid to the outside of the membrane element 10. The liquid collection tube 11 is typically a resin tube. The liquid collection tube 11 is provided along its longitudinal direction with a plurality of through holes 11h at given intervals. The permeated liquid flows into the liquid collection tube 11 through these through holes 11h.

Examples of the separation membrane 12 include a reverse osmosis membrane, a nanofiltration membrane, an ultrafiltration membrane, and a microfiltration membrane.

The first flow path spacer 13 is also called a raw liquid flow path spacer or a feed-side flow path member. The first flow path spacer 13 is a sheet having a mesh structure. The second flow path spacer 14 is also called a permeated liquid flow path spacer or a permeate-side flow path member. The second flow path spacer 14 also is a sheet having a mesh structure. The materials of the flow path spacers 13 and 14 are typically resin. The flow path spacer 13 may be produced by extrusion. The flow path spacer 13 can be produced by another shaping method such as 3D printing.

The membrane element 10 is used, for example, in a tube-shaped pressure container. Fed into the pressure container, the raw liquid to be treated flows into the raw liquid flow path from one end of the membrane element 10. The raw liquid is concentrated by filtering with the separation membrane 12. This produces a concentrated raw liquid and a permeated liquid. The concentrated raw liquid is discharged out of the membrane element 10 from the other end of the membrane element 10. The permeated liquid is discharged out of the membrane element 10 through the permeated liquid flow path and the liquid collection tube 11. The membrane element 10 produces the permeated liquid from which a solute, such as ions and salts, included in the raw liquid has been removed.

The first flow path spacer 13 included in the membrane element 10 has a good balance between shear stress and pressure loss. A reduction in pressure loss can decrease power necessary for a pump to feed the raw liquid and consequently can decrease energy needed to produce the permeated liquid. A reduction in pressure loss can also prevent telescoping of the membrane element 10. A sufficient shear stress acting on the separation membrane 12 reduces formation of a concentration polarization layer. This can ensure production of a sufficient amount of the permeated liquid. A high shear stress acting on the separation membrane 12 may also reduce occurrence of biofouling.

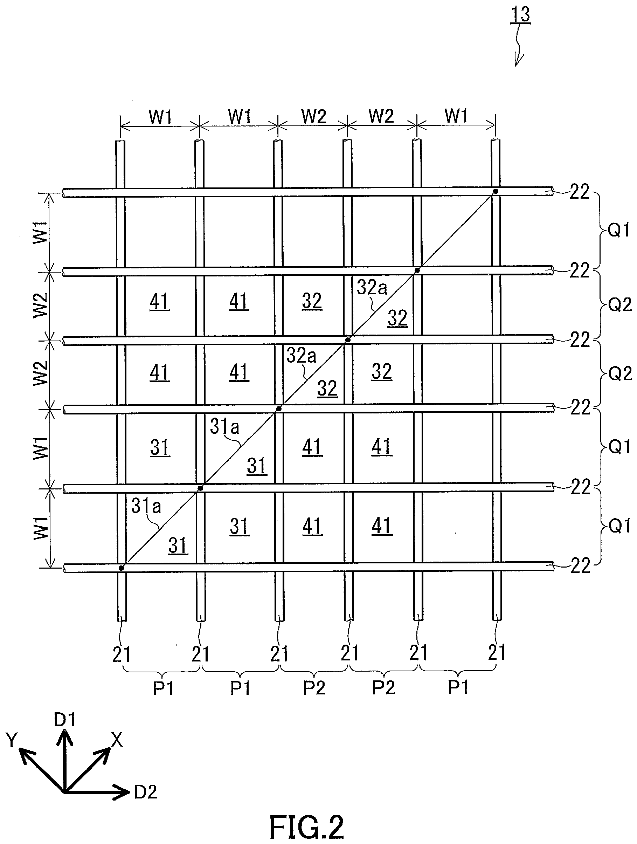

Next, the structure of the first flow path spacer 13 will be described in detail. FIG. 2 shows a plan view of a portion of the first flow path spacer 13 included in the spiral membrane element 10 shown in FIG. 1. The first flow path spacer 13 may be referred to simply as "spacer 13" hereinafter.

The spacer 13 of the present embodiment is a raw liquid flow path spacer to be placed in a raw liquid flow path. Raw liquid flow path spacers are required to have an ability to achieve both a high shear stress and a low pressure loss. A more sufficient benefit can be obtained by using the spacer 13 of the present embodiment as a raw liquid flow path spacer. The spacer 13 is potentially applicable to a permeate liquid flow path spacer.

As shown in FIG. 2, the spacer 13 includes a plurality of first linear portions 21 and a plurality of second linear portions 22. The linear portions 21 and 22 are elongated portions formed of a resin material such as polyester, polyethylene, and polypropylene. The linear portions 21 and 22 have cross-sections having a shape of, for example, a circle. The linear portions 21 and 22 have a thickness (diameter) in the range of, for example, 0.2 to 1.0 mm. The linear portions 21 and 22 may be uniformly thick, or may be partially thin. The thickness of the spacer 13 is approximately equal to the sum of the thickness of the linear portion 21 and that of the linear portion 22.

The plurality of first linear portions 21 are disposed parallel to each other. The plurality of first linear portions 21 each extend in the first direction D1. The plurality of second linear portions 22 are disposed parallel to each other. The plurality of second linear portions 22 each extend in the second direction D2 inclined with respect to the first direction D1. In the present embodiment, the first direction D1 and the second direction D2 are mutually orthogonal directions. The plurality of first linear portions 21 and the plurality of second linear portions 22 intersect each other to form a mesh structure having a large number of opening portions. The first direction D1 and the second direction D2 may not be orthogonal to each other. The first linear portion 21 and the second linear portion 22 are not necessarily orthogonal to each other.

The first direction D1 and the second direction D2 are each a direction inclined with respect to the longitudinal direction (X direction) of the liquid collection tube 11. Specifically, the first direction D1 is inclined at 45° with respect to the longitudinal direction of the liquid collection tube 11. The second direction D2 is inclined at 45° with respect to the longitudinal direction of the liquid collection tube 11. In other words, the angle formed by the first direction D1 and the longitudinal direction of the liquid collection tube 11 is equal to the angle formed by the second direction D2 and the longitudinal direction of the liquid collection tube 11. Such a configuration makes it easy for shear stress to uniformly act on the whole surface of the separation membrane 12.

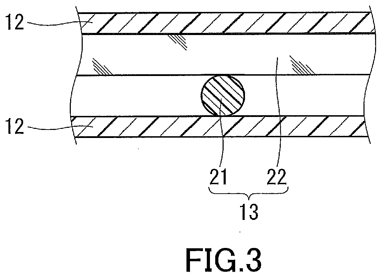

In the present embodiment, the spacer 13 consists of the first linear portion 21 and the second linear portion 22. As shown in FIG. 3, the plurality of first linear portions 21 and the plurality of second linear portions 22 are layered in the thickness direction of the spacer 13 to form a double-layered structure. An interval (the width of the raw liquid flow path) between the separation membranes 12 is equal to the thickness of the spacer 13. The first linear portion 21 and the second linear portion 22 are bonded or fused together at their intersection. Such a configuration allows the flow of the raw liquid to serpentine in the thickness direction of the spacer 13 and makes it easy for shear stress to act on the surface of the separation membrane 12.

It should be noted that the plurality of first linear portions 21 and the plurality of second linear portions 22 may be woven. That is, the first linear portions 21 and the second linear portions 22 may alternate in position in the thickness direction of the spacer 13.

In the present embodiment, the first linear portions 21 are disposed at unequal intervals. There are a first pair P1 and a second pair P2 in the spacer 13. For the first pair P1, the first linear portions 21 adjacent to each other are disposed at a first interval W1. For the second pair P2, the first linear portions 21 adjacent to each other are disposed at a second interval W2 narrower than the first interval W1.

In the present embodiment, the second linear portions 22 also are disposed at unequal intervals. There are a first pair Q1 and a second pair Q2 in the spacer 13. For the first pair Q1, the second linear portions 22 adjacent to each other are disposed at the first interval W1. For the second pair Q2, the second linear portions 22 adjacent to each other are disposed at the second interval W2 narrower than the first interval W1. The first pair P1 and the second pair P2 are included in the plurality of first linear portions 21, and the first pair Q1 and the second pair Q2 are included in the plurality of second linear portions 22. That is, each of the first pair P1 and the second pair P2 is a pair of the first linear portions 21. Each of the first pair Q1 and the second pair Q2 is a pair of the second linear portions 22.

The spacer 13 includes a first opening portion 31 and a second opening portion 32 as opening portions in the mesh structure. The first opening portion 31 has a diagonal line 31a parallel to a predetermined direction. The second opening portion 32 has a diagonal line 32a parallel to the predetermined direction. An opening area of the second opening portion 32 is smaller than an opening area of the first opening portion 31. The diagonal line 32a of the second opening portion 32 is shorter than the diagonal line 31a of the first opening portion 31. The difference between the length of the diagonal line 31a and the length of the diagonal line 32a is in the range of 10 to 35% of the length of the diagonal line 31a. Such a configuration makes it possible to balance shear stress and pressure loss.

The term "predetermined direction" refers to, for example, the direction parallel to the longitudinal direction (X direction) of the liquid collection tube 11. When the predetermined direction is parallel to the longitudinal direction of the liquid collection tube 11, the effect of the spacer 13 can be more sufficiently obtained.

In an example, the length of the diagonal line 31a of the first opening portion 31 may be in the range of 5.5 to 6.5 mm. The length of the diagonal line 32a may be adjusted so that the difference between the length of the diagonal line 31a and the length of the diagonal line 32a will fall within the range of 10 to 35% of the length of the diagonal line 31a.

Herein, an interval between linear portions refers to the shortest distance measured between the central lines of the linear portions when the spacer 13 is viewed in plan. The term "length of a diagonal line" refers to the length of a diagonal line of a quadrilateral defined by the central lines of a pair of the first linear portions 21 and the central lines of a pair of the second linear portions 22 when the spacer 13 is viewed in plan.

The first opening portion 31 is a square opening portion defined by the first intervals W1. The second opening portion 32 is a square opening portion defined by the second intervals W2.

In the present embodiment, an arrangement pattern of the first linear portions 21 in the second direction D2 coincides with an arrangement pattern of the second linear portions 22 in the first direction D1. Such a configuration makes it easy to balance shear stress and pressure loss in both the first direction D1 and the second direction D2. The arrangement pattern of the first linear portions 21 in the second direction D2 may be different from the arrangement pattern of the second linear portions 22 in the first direction D1.

The first opening portion 31 and the second opening portion 32 repeatedly appear along the predetermined direction (X direction). In the present embodiment, a group of the first opening portion 31, first opening portion 31, second opening portion 32, and second opening portion 32 is repeated. The first opening portion 31 and the second opening portion 32 are not necessarily disposed regularly in the predetermined direction. The first opening portion 31 and the second opening portion 32 may be arranged randomly in the predetermined direction. A structure composed of a combination of a large opening portion and a small opening portion makes it possible to balance shear stress and pressure loss.

The spacer 13 of the present embodiment further includes an opening portion 41 in addition to the first opening portion 31 and the second opening portion 32. The opening portion 41 is a rectangular opening portion defined by the first interval W1 and the second interval W2. The opening area of the opening portion 41 is larger than the opening area of the second opening portion 32 and is smaller than the opening area of the first opening portion 31. Assuming that one mesh unit is composed of 16 (4 × 4) opening portions, the mesh unit is repeated along the first direction D1 and the second direction D2. Such a configuration makes it possible to balance shear stress and pressure loss.

Flow path spacers according to some modifications will be described hereinafter. The elements common between the embodiment and the modifications are denoted by the same reference characters, and the descriptions of such elements may be omitted. That is, the description of each of the embodiment and the modifications is applicable to the others, unless there is technical inconsistency. The configurations of the embodiment and the modifications may be combined with each other, unless there is technical inconsistency.

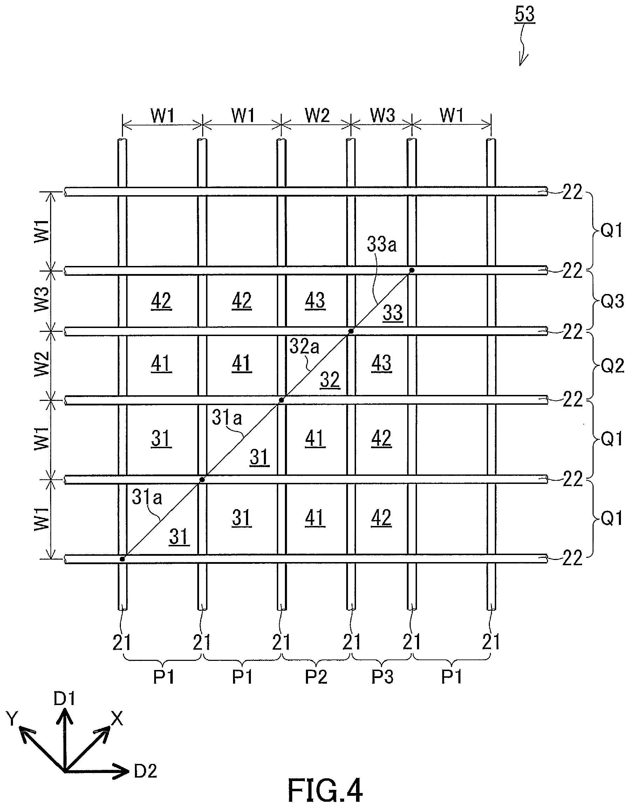

FIG. 4 shows a plan view of a portion of a first flow path spacer 53 according to a modification 1. In the spacer 53, there is further a third pair P3 in addition to the first pair P1 and the second pair P2. For the third pair P3, the first linear portions 21 adjacent to each other are disposed at a third interval W3 narrower than the second interval W2. In the spacer 53, there is further a third pair Q3 in addition to the first pair Q1 and the second pair Q2. For the third pair Q3, the second linear portions 22 adjacent to each other are disposed at the third interval W3 narrower than the second interval W2. The plurality of first linear portions 21 and the plurality of second linear portions 22 further form a third opening portion 33 having an opening area smaller than the opening area of the second opening portion 32 and having a diagonal line 33a parallel to the predetermined direction. Such a configuration also makes it possible to balance shear stress and pressure loss. That is, the upper limit of the number of opening portions each having a different opening area is not particularly limited.

In the present modification, the third opening portion 33 is a square opening portion defined by the third intervals W3.

The diagonal line 33a of the third opening portion 33 is shorter than the diagonal line 31a of the first opening portion 31 and than the diagonal line 32a of the second opening portion 32. The difference between the length of the diagonal line 32a of the second opening portion 32 and the length of the diagonal line 33a of the third opening portion 33 is, for example, in the range of 10 to 35% of the length of the diagonal line 31a of the first opening portion 31. Such a configuration makes it possible to balance shear stress and pressure loss.

In the present modification as well, the arrangement pattern of the first linear portions 21 in the second direction D2 coincides with the arrangement pattern of the second linear portions 22 in the first direction D1. The arrangement pattern of the first linear portions 21 in the second direction D2 may be different from the arrangement pattern of the second linear portions 22 in the first direction D1.

The first opening portion 31, the second opening portion 32, and the third opening portion 33 repeatedly appear along the predetermined direction (X direction). In the present modification, a group of the first opening portion 31, the first opening portion 31, the second opening portion 32, and the third opening portion 33 is repeated. The first opening portion 31, the second opening portion 32, and the third opening portion 33 are not necessarily disposed regularly in the predetermined direction. The first opening portion 31, the second opening portion 32, and the third opening portion 33 may be arranged randomly in the predetermined direction. A structure composed of a combination of a large opening portion and a small opening portion makes it possible to balance shear stress and pressure loss.

For example, the position of the second opening portion 32 and that of the third opening portion 33 may be switched. That is, the first opening portion 31, the third opening portion 33, and the second opening portion 32 may be arranged in this order along the predetermined direction. The first opening portion 31, the second opening portion 32, and the third opening portion 33 may be arranged in any order.

The spacer 53 of the present modification further includes opening portions 41 to 43 in addition to the first opening portion 31, the second opening portion 32, and the third opening portion 33. The opening portion 41 is a rectangular opening portion defined by the first interval W1 and the second interval W2. The opening area of the opening portion 41 is larger than the opening area of the second opening portion 32 and is smaller than the opening area of the first opening portion 31. The opening portion 42 is a rectangular opening portion defined by the first interval W1 and the third interval W3. The opening area of the opening portion 42 is larger than the opening area of the third opening portion 33 and is smaller than the opening area of the first opening portion 31. The opening portion 43 is a rectangular opening portion defined by the second interval W2 and the third interval W3. The opening area of the opening portion 43 is larger than the opening area of the third opening portion 33 and is smaller than the opening area of the second opening portion 32. Assuming that one mesh unit is composed of 16 (4 × 4) opening portions, the mesh unit is repeated along the first direction D1 and the second direction D2. Such a configuration makes it possible to balance shear stress and pressure loss.

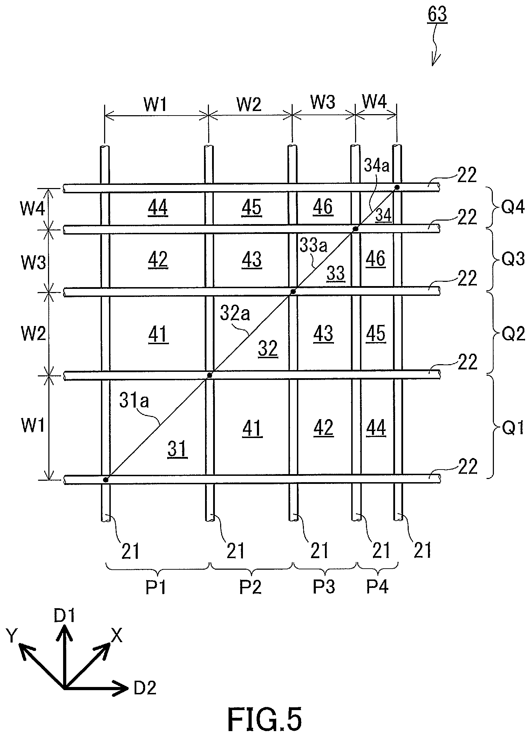

FIG. 5 shows a plan view of a portion of a flow path spacer 63 according to a modification 2. In the spacer 63, there is further a fourth pair P4 in addition to the first pair P1, the second pair P2, and the third pair P3. For the fourth pair P4, the first linear portions 21 adjacent to each other are disposed at a fourth interval W4 narrower than the third interval W3. In the spacer 63, there is further a fourth pair Q4 in addition to the first pair Q1, the second pair Q2, and the third pair Q3. For the fourth pair Q4, the second linear portions 22 adjacent to each other are disposed at the fourth interval W4 narrower than the third interval W3. The plurality of first linear portions 21 and the plurality of second linear portions 22 further form a fourth opening portion 34 having an opening area smaller than the opening area of the third opening portion 33 and having a diagonal line 34a parallel to the predetermined direction. Such a configuration also makes it possible to balance shear stress and pressure loss. That is, the upper limit of the number of opening portions each having a different opening area is not particularly limited.

In the present modification, the fourth opening portion 34 is a square opening portion defined by the fourth intervals W4.

The diagonal line 34a of the fourth opening portion 34 is shorter than the diagonal line 31a of the first opening portion 31, than the diagonal line 32a of the second opening portion 32, and than the diagonal line 33a of the third opening portion 33. The difference between the length of the diagonal line 33a of the third opening portion 33 and the length of the diagonal line 34a of the fourth opening portion 34 is, for example, in the range of 10 to 35% of the length of the diagonal line 31a of the first opening portion 31. Such a configuration makes it possible to balance shear stress and pressure loss.

In the present modification as well, the arrangement pattern of the first linear portions 21 in the second direction D2 coincides with the arrangement pattern of the second linear portions 22 in the first direction D1. The arrangement pattern of the first linear portions 21 in the second direction D2 may be different from the arrangement pattern of the second linear portions 22 in the first direction D1.

The first opening portion 31, the second opening portion 32, the third opening portion 33, and the fourth opening portion 34 repeatedly appear along the predetermined direction (X direction). In the present modification, a group of the first opening portion 31, the second opening portion 32, the third opening portion 33, and the fourth opening portion 34 is repeated. The first opening portion 31, the second opening portion 32, the third opening portion 33, and the fourth opening portion 34 are not necessarily disposed regularly in the predetermined direction. The first opening portion 31, the second opening portion 32, the third opening portion 33, and the fourth opening portion 34 may be arranged randomly in the predetermined direction. A structure composed of a combination of a large opening portion and a small opening portion makes it possible to balance shear stress and pressure loss.

For example, the position of the second opening portion 32 and that of the third opening portion 33 may be switched. The first opening portion 31, the third opening portion 33, the second opening portion 32, and the fourth opening portion 34 may be arranged in this order along the predetermined direction. The first opening portion 31, the second opening portion 32, the third opening portion 33, and the fourth opening portion 34 may be arranged in any order.

The spacer 63 of the present modification further includes opening portions 41 to 46 in addition to the first opening portion 31, the second opening portion 32, the third opening portion 33, and the fourth opening portion 34. The configurations of the opening portions 41 to 43 are as described previously. The opening portion 44 is a rectangular opening portion defined by the first interval W1 and the fourth interval W4. The opening portion 45 is a rectangular opening portion defined by the second interval W2 and the fourth interval W4. The opening portion 46 is a rectangular opening portion defined by the third interval W3 and the fourth interval W4. The opening area of the opening portion 44 is larger than the opening area of the opening portion 45. The opening area of the opening portion 45 is larger than the opening area of the opening portion 46. Assuming that one mesh unit is composed of 16 (4 × 4) opening portions, the mesh unit is repeated along the first direction D1 and the second direction D2. Such a configuration makes it possible to balance shear stress and pressure loss.

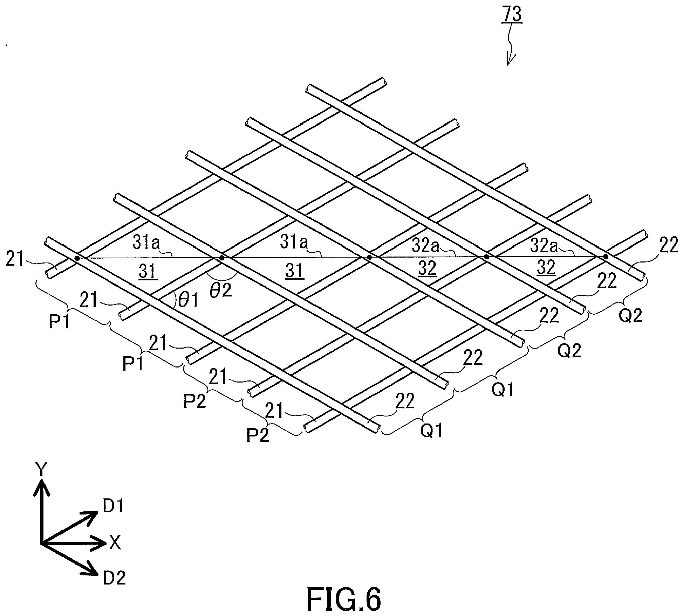

FIG. 6 shows a plan view of a portion of a flow path spacer 73 according to a modification 3. In the spacer 73 of the present modification, the first linear portion 21 extends in the first direction D1. The second linear portion 22 extends in the second direction D2. The first direction D1 is not orthogonal to the second direction D2. Angles formed by the first direction D1 and the second direction D2 include an acute angle θ1 and an obtuse angle θ2. In the spacer 73, the first opening portion 31 and the second opening portion 32 are in the shape of a parallelogram having the acute angle θ1 and the obtuse angle θ2 as internal angles. In the present modification, the first direction D1 is a direction inclined at 30° with respect to the longitudinal direction (X direction) of the liquid collection tube 11. The second direction D2 is a direction inclined at -30° with respect to the longitudinal direction (X direction) of the liquid collection tube 11. The acute angle θ1 is 60°. The obtuse angle θ2 is 120°. The spacer 73 of the present modification also has a good balance between shear stress and pressure loss. In the spacer of the present disclosure, the first linear portion 21 and the second linear portion 22 are not necessarily orthogonal to each other.

In the present modification, the diagonal line 31a of the first opening portion 31 is the longer diagonal line of the two diagonal lines of the parallelogram. The diagonal line 32a of the second opening portion 32 is the longer diagonal line of the two diagonal lines of the parallelogram. The diagonal lines 31a and 32a are parallel to the predetermined direction (for example, the X direction). The diagonal line 31a of the first opening portion 31 may be the shorter diagonal line of the two diagonal lines of the parallelogram. The diagonal line 32a of the second opening portion 32 may be the shorter diagonal line of the two diagonal lines of the parallelogram.

### EXAMPLES

Shear stress acting on a separation membrane and a pressure loss were examined by computer simulation for membrane elements including first flow path spacers. The simulation was carried out under the following conditions.
Fluid analysis software: Fluent manufactured by ANSYS Japan K.K.
Thickness of linear portion: 0.43 mm
Total thickness of spacer: 0.84 mm (the 0.02-mm reduction is attributed to fusion)
Water flow rate: 11.3 cm/sec

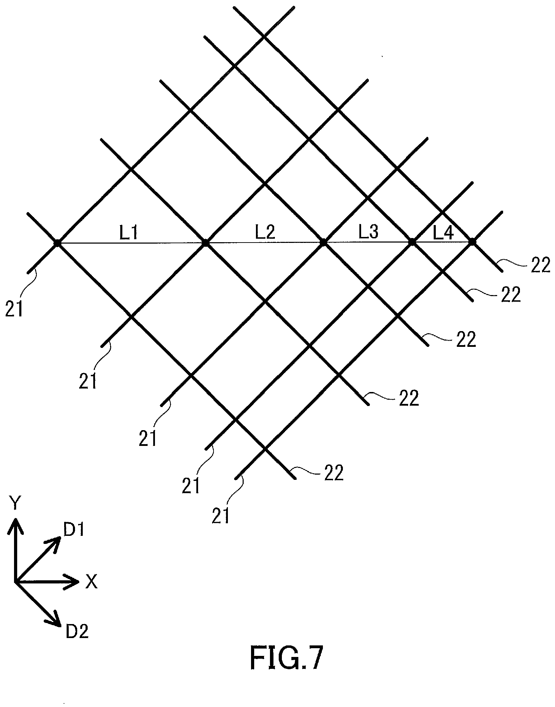

As shown in FIG. 7, the first linear portions 21 and the second linear portions 22 are mutually orthogonal in the spacers for which the simulation was carried out. The lengths of diagonal lines L1 to L4 of opening portions were adjusted to the values in Table 1 by changing the intervals between the linear portions. The arrangement pattern of the first linear portions 21 in the second direction D2 coincides with the arrangement pattern of the second linear portions 22 in the first direction D1. In Samples 1 to 5 and 8, L1 = L2 > L3 = L4. In Sample 6, L1 = L2 > L3 > L4. In Sample 7, L1 > L2 > L3 > L4. Sample 9 is a conventional spacer having only square opening portions with a length of a diagonal line of 5.0 mm. The term "average shear stress" refers to the average of shear stress applied to the surface of a separation membrane. The term "pressure loss" refers to a pressure loss per 132 mm length of a membrane element.

**[Table 1]**

| | Length of diagonal line of opening portion (mm) | | | | Ratio of difference to L1 (%) | Average shear stress (Pa) | Pressure loss (kPa) |
|---|---|---|---|---|---|---|---|
| | L1 | L2 | L3 | L4 | | | |
| Sample 1 | 6.0 | 6.0 | 2.4 | 2.4 | 60 | 1.5 | 1.617 |
| Sample 2 | 6.0 | 6.0 | 3.0 | 3.0 | 50 | 1.5 | 1.497 |
| Sample 3 | 6.0 | 6.0 | 3.6 | 3.6 | 40 | 1.4 | 1.396 |
| Sample 4 | 6.0 | 6.0 | 4.2 | 4.2 | 30 | 1.4 | 1.301 |
| Sample 5 | 6.0 | 6.0 | 4.8 | 4.8 | 20 | 1.4 | 1.226 |
| Sample 6 | 6.0 | 6.0 | 4.8 | 4.2 | 20, 10 | 1.4 | 1.259 |
| Sample 7 | 6.0 | 5.4 | 4.8 | 4.2 | 10, 10, 10 | 1.4 | 1.302 |
| Sample 8 | 6.0 | 6.0 | 5.7 | 5.7 | 5 | 1.3 | 1.137 |
| Sample 9 | 5.0 | 5.0 | 5.0 | 5.0 | 0 | 1.4 | 1.349 |

For Samples 1 to 5 and 8, the "ratio of difference to L1" shows the value of 100 × (L1 - L3)/L1. For Sample 6, the "ratio of difference to L1" shows the value of 100 × (L1 - L3)/L1 and the value of 100 × (L3 - L4)/L1. For Sample7, the "ratio of difference to L1" shows the value of 100 × (L1 - L2)/L1, the value of 100 × (L2 - L3)/L1, and the value of 100 × (L3 - L4)/L1.

The spacers of Samples 4 to 7 not only exhibited a pressure loss lower than that of the spacer of Sample 9 but also exhibited an average shear stress equivalent to that of the spacer of Sample 9. The spacers of Samples 4 to 7 had a very good balance between shear stress and pressure loss.

The spacers of Samples 1 and 2 exhibited an average shear stress higher than that of the spacer of Sample 9. The spacer of Sample 3 exhibited as high an average shear stress as that of the spacer of Sample 9. However, the pressure losses of the spacers of Samples 1 to 3 were higher than that of the spacer of Sample 9.

The spacer of Sample 8 exhibited a pressure loss lower than that of the spacer of Sample 9. However, the average shear stress of the spacer of Sample 8 was lower than that of the spacer of Sample 9.

### INDUSTRIAL APPLICABILITY

The technique of the present disclosure is useful for spiral membrane elements. Spiral membrane elements may be used in various applications such as desalination of seawater, production of pure water, wastewater treatment, manufacture of medicinal chemicals, manufacture of foods, and separation of active ingredients.

## Claims

1. A flow path spacer to be used between separation membranes wounded around a liquid collection tube of a spiral membrane element, the flow path spacer comprising:
a plurality of first linear portions each extending in a first direction inclined with respect to a longitudinal direction of the liquid collection tube; and
a plurality of second linear portions each extending in a second direction inclined with respect to both the longitudinal direction of the liquid collection tube and the first direction, wherein
the plurality of first linear portions and the plurality of second linear portions intersect each other to form a first opening portion and a second opening portion each having a diagonal line parallel to a predetermined direction,
an opening area of the second opening portion is smaller than an opening area of the first opening portion, and
the difference between the length of the diagonal line of the first opening portion and the length of the diagonal line of the second opening portion is in the range of 10 to 35% of the length of the diagonal line of the first opening portion.

2. The flow path spacer according to claim 1, wherein the plurality of first linear portions and the plurality of second linear portions further form a third opening portion having an opening area smaller than the opening area of the second opening portion and having a diagonal line parallel to the predetermined direction.

3. The flow path spacer according to claim 2, wherein the difference between the length of the diagonal line of the second opening portion and the length of the diagonal line of the third opening portion is in the range of 10 to 35% of the length of the diagonal line of the first opening portion.

4. The flow path spacer according to claim 2 or 3, wherein the plurality of first linear portions and the plurality of second linear portions further form a fourth opening portion having an opening area smaller than the opening area of the third opening portion and having a diagonal line parallel to the predetermined direction.

5. The flow path spacer according to claim 4, wherein the difference between the length of the diagonal line of the third opening portion and the length of the diagonal line of the fourth opening portion is in the range of 10 to 35% of the length of the diagonal line of the first opening portion.

6. The flow path spacer according to any one of claims 1 to 5, wherein the predetermined direction is a direction parallel to the longitudinal direction of the liquid collection tube.

7. The flow path spacer according to any one of claims 1 to 6, wherein an arrangement pattern of the plurality of first linear portions in the second direction coincides with an arrangement pattern of the plurality of second linear portions in the first direction.

8. The flow path spacer according to any one of claims 1 to 7, wherein the plurality of first linear portions and the plurality of second linear portions form a double-layered structure in the thickness direction of the flow path spacer.

9. The flow path spacer according to any one of claims 1 to 8, wherein the first direction and the second direction are mutually orthogonal directions.

10. The flow path spacer according to any one of claims 1 to 8, wherein angles formed by the first direction and the second direction comprise an acute angle and an obtuse angle.

11. The flow path spacer according to any one of claims 1 to 10, being a flow path spacer to be placed in a raw liquid flow path.

12. A spiral membrane element comprising the flow path spacer according to any one of claims 1 to 11.
